# EUROPÄISCHE PATENTSCHRIFT

(11) **EP 1 749 168 B1**
(45) Veröffentlichungstag und Bekanntmachung des Hinweises auf die Patenterteilung: **05.10.2011**
(21) Anmeldenummer: 04735222.4
(22) Anmeldetag: 28.05.2004
(51) Int. Cl.: F16L 55/46, F16L 55/26

(54) **VERFAHREN UND VORRICHTUNG ZUM REINIGEN, VERMESSEN, INSPIZIEREN ODER DERGLEICHEN DER NICHT MOLCHBARER ROHRLEITUNGEN**
METHOD AND DEVICE FOR CLEANING, MEASURING, INSPECTING OR SIMILAR OF NON-PIGGABLE PIPELINES
PROCÉDÉ ET DISPOSITIF POUR NETTOYER, MESURER, INSPECTER OU ANALOGUE, DES CONDUITES TUBULAIRES QUI NE PEUVENT PAS ETRE RACLÉES

(43) Veröffentlichungstag der Anmeldung: 07.02.2007
(73) Patentinhaber: PII Pipetronix GmbH, 76297 Stutensee (DE)
(72) Erfinder: STROHMEIER, Uwe, 69181 Leimen (DE); KOPP, Gunnar, Houston, TX 77007 (US)
(74) Vertreter: Lempert, Jost
(86) Internationale Anmeldenummer: PCT/EP2004/005817
(87) Internationale Veröffentlichungsnummer: WO 2005/119117

(56) Entgegenhaltungen:
- EP-A- 0 105 418
- EP-A- 0 426 871
- WO-A-01/18442
- WO-A-01/76780
- WO-A-03/076841
- DE-A1- 19 746 511
- GB-A- 2 247 504
- US-A- 3 299 459
- US-A- 4 649 948
- US-A- 5 025 670
- US-B1- 6 198 277

## Beschreibung

Die Erfindung betrifft eine Vorrichtung und ein Verfahren zum Einbringen eines molchartigen Arbeitsgeräts in eine in Betrieb.befindliche Rohrleitung nach den Oberbegriffen der Ansprüche 1 bzw. 20.

Zum Reinigen, Vermessen oder Inspizieren von Rohrleitungen, insbesondere unterirdisch verlegter Gas- oder Ölpipelines, werden heutzutage vorzugsweise sogenannte Molche benutzt. Bei einem Molch handelt es sich gemäß einer allgemeinen Definition um einen Lauf- oder Passkörper, der eine Rohrleitung mit eigenem Antrieb oder mit Fremdenergie durchfahren kann, um bestimmte Tätigkeiten auszuführen. Dabei wird der Grad der Eignung einer Rohrleitung für eine Molchdurchfahrt auch als Molchbarkeit bezeichnet. Molchbare Rohrleitungen sind solche Rohrleitungen, die spezielle Erfordernisse des Molchbetriebs, insbesondere auch bezüglich Schweißtechnik und Montage, erfüllen. Weiterhin muss eine molchbare Rohrleitung zumindest eine sogenannte Molchstation oder Schleuse aufweisen, bei der es sich um eine Armatur zum Einsetzen oder Entnehmen eines oder mehrerer Molche in eine bzw. aus einer Rohrleitung handelt.

Die US 3 299 459 offenbart eine Vorrichtung zum Einbringen eines Arbeitsgeräts in eine im Betrieb Befindliche Rohrleitung gemäß dem Oberbegriff des Anspruchs 1 und ein entsprechendes Verfahren gemäß dem Oberbegriff des Anspruchs 20. Sie zeigt eine Einführeinrichtung für einen Molch, wobei der Durchmesser eines Einführrohres wesentlich geringer ist als der der Pipeline. Das in die Pipeline eingeführte Ende ist mit einer Krümmung abgebogen. In einer zweiten Ausgestaltung ist innerhalb der Pipeline eine schräg eingelassene Ablenkplatte eingesetzt.

Eine weitere Weise einen Molch in eine Rohrleitung aufzunehmen ist in der WO 01/18442 A beschrieben, wobei ein Führungsrohr mit einer Rohrleitung über ein Ventil verbunden ist. Das Arbeitsgerät wird senkrecht zur Fließrichtung mittels dieser Schleuse in die Rohrleitung eingelassen.

Seit dem Aufkommen intelligenter Molche, d.h. solcher Molche, die nicht nur aus mechanischen Elementen bestehen, sondern zusätzlich einen elektrischen/elektronischen Teil besitzen und damit Messdaten erfassen, verarbeiten und speichern bzw. senden können, werden bestimmte Arten von Rohrleitungen regelmäßig mit derartigen Molchstationen versehen, um beispielsweise Reinigung- oder Inspektionsarbeiten ohne direkten Zugang zur Rohrleitung, d.h. ohne Aufgraben der Rohrleitung und einen damit verbundenen Kostennachteil durchführen zu können.

Es existieren jedoch heutzutage noch eine Vielzahl älterer Leitungen, die - beispielsweise im Falle von Gasleitungen im städtischen Bereich - 90 bis 100 Jahre alt sein können und über deren Zustand praktisch keinerlei Informationen vorliegen. Derartige Rohrleitungen liegen regelmäßig etwa 1 bis 2 m tief im Erdreich vergraben, wobei die Tiefe unter Straßen auch bis zu 4 oder 5 m betragen kann. Weiterhin besitzen derartige Rohrleitungen oftmals eine Vielzahl von Schiebern oder Ventilen und weisen in ihrem Verlauf enge Bögen auf, so dass z.B. Rohrleitungen regelmäßig als nicht molchbar (unpiggable) eingestuft werden. Ein Zugang zu derartigen Leitungen, beispielsweise zu Reinigungs-, Vermessungs- oder Inspektionszwecken, ist damit bislang nur durch direkten Zugang von außen möglich, was besonders im städtischen Bereich mit einem enormen Aufwand und dementsprechenden Kostennachteil möglich ist.

Der Erfindung liegt die Aufgabe zugrunde, eine Vorrichtung und ein Verfahren zum Einbringen eines Molch-Arbeitsgerätes in eine Rohrleitung oder Pipeline zu schaffen, durch dessen Einsatz sich die vorstehend aufgeführten Nachteile in Verbindung mit der Arbeit an bislang nicht molchbaren Rohrleitungen vermeiden lassen.

Die Aufgabe wird gelöst durch eine Vorrichtung mit den Merkmalen des Anspruchs 1 sowie durch ein Verfahren mit den Merkmalen des Anspruchs 20. Erfindungsgemäß wird demnach ein Molch durch Anbringen eines sogenannten "Hot Tap" ohne Flussunterbrechung in eine Rohrleitung eingeschleust, wobei nur ein lokal begrenzter Zugang zur Rohrleitung erforderlich ist. Auf diese Weise lassen sich erfindungsgemäß quasi beliebige Strecken nicht molchbarer Rohrleitungen auf kostengünstige Weise abarbeiten.

Um das Einbringen des Arbeitsgeräts in die Rohrleitung zu erleichtern, sieht eine erste Weiterbildung des erfindungsgemäßen Verfahrens vor, dass das Anbohren der Rohrleitung und das Einschleusen des Arbeitsgeräts unter einem Winkel zwischen 30° und 90°, von etwa 45° bezogen auf eine Längsachse der Rohrleitung, vorzugsweise zwischen 30° und 60° und insbesondere bei etwa 45° erfolgt. Aus demselben Grund kann weiterhin vorgesehen sein, dass vor dem Einbringen des Arbeitsgeräts in die Rohrleitung in diese eine Führungsanordnung für das Arbeitsgerät zumindest teilweise eingebracht wird.

Um das erfindungsgemäße Verfahren auch bei relativ hohen Betriebsdrücken in der Rohrleitung sicher einsetzen zu können, sieht eine äußerst bevorzugte Weiterbildung des erfindungsgemäßen Verfahrens vor, dass zumindest die Führungsanordnung gegen einen Betriebsdruck in der Rohrleitung mittels einer Halteeinrichtung in Position gehalten wird. Weiterhin kann vorgesehen sein, dass das Arbeitsgerät aus einem mit zumindest der Führungsanordnung verbundenen Transport-/Lagerbehälter in die Rohrleitung injiziert wird.

Zum Überbrücken von Hindernissen in der Rohrleitung für das Arbeitsgerät, wie einen Schieber oder dergleichen können, beiderseits des Hindernisses jeweils Anbohrungen der Rohrleitung vorgenommen und durch eine Bypass-Rohrleitung für das Arbeitsgerät verbunden werden.

Das erfindungsgemäße Verfahren kann Teil eines kompletten Verfahrensablaufs in in Betrieb befindlichen Rohrleitungen sein, der darauf abzielt, Daten betreffend einer im wesentlichen unbekannten Rohrleitung in optimal anwendungsspezifisch angepasster Art und Weise und mit möglichst geringen Kosten für den Auftraggeber zu sammeln.

Die Innenauswölbung der erfindungsgemäßen Vorrichtung sorgt dafür, dass das Arbeitsgerät stetig um eine am Rand des Anbohrlochs der Rohrleitung gebildete Kante herum geführt wird, ohne dass es zu einem Hängenbleiben oder zu Beschädigungen des Arbeitsgeräts kommt.

Auf diese Weise lässt sich erfindungsgemäß das Arbeitsgerät in die Rohrleitung einbringen, ohne dass es zu einem harten Anstoßen des Arbeitsgeräts an der Wandung der Rohrleitung kommt. Vielmehr sorgt weiterhin der gekrümmte Fortsatz der Führungsanordnung dafür, dass das Arbeitsgerät beim Eindringen in die Rohrleitung eine Geschwindigkeit im Wesentlichen allein in Richtung der Rohrleitungs-Längsachse besitzt. Zu diesem Zweck sieht eine äußerst bevorzugte Weiterbildung der erfindungsgemäßen Vorrichtung vor, dass der gekrümmte Fortsatz der Führungsanordnung im Anlagebereich eine im Wesentlichen zu der Rohrleitungs-Längsachse parallele Tangente aufweist. Aus den vorstehend genannten Gründen beträgt darüber hinaus der Winkel zwischen der Rohrleitungs-Längsachse und dem im Wesentlichen geraden Verlauf des ersten Rohrteils darüber hinaus vorzugsweise 45° (oder auch zwischen 30° bis 45°; bzw. zwischen 45° und 90°).

Nach einer bevorzugten Weiterbildung der erfindungsgemäßen Vorrichtung weist die Führungsanordnung an ihren dem Einbringabschnitt abgewandten Ende ein weiteres, gekrümmtes Rohrteil mit gegenüber der Verlaufsrichtung des ersten Rohrteils abbiegendem Verlauf auf, wobei die Abbiegung vorzugsweise im Wesentlichen 90° beträgt. Auf diese Weise lässt sich erfindungsgemäß eine Verringerung der mechanischen Belastung der Rohrleitung und der Führungsanordnung beim Einbringen des Arbeitsgeräts in Letztere erreichen, insbesondere wenn gemäß einer weiteren Ausgestaltung der erfindungsgemäßen Vorrichtung in eingebrachtem Zustand der Führungsanordnung eine Verlaufsrichtung des zweiten Rohrteils an dessen dem ersten Rohrteil abgewandten Ende zumindest lokal in einer Ebene im Wesentlichen parallel zu einer Verlaufsebene der Rohrleitung ausgerichtet ist. Vorteilhafter Weise ist dabei die Verlaufsrichtung des zweiten Rohrteils an dessen dem ersten Rohrteil abgewandten Ende unter einem Winkel von im Wesentlichen 90° bezüglich der Rohrleitungs-Längsachse ausgerichtet, so dass das Arbeitsgerät quer zu der Rohrleitungs-Längsachse in die Führungsanordnung eingebracht werden kann.

Um das Arbeitsgerät in eine in Betrieb befindliche, druckbeaufschlagte Rohrleitung einführen zu können, weist die erfindungsgemäße Vorrichtung gemäß einer bevorzugten Weiterbildung in einem Fügebereich zwischen dem ersten und dem zweiten Rohrteil ein Verschließmittel auf, das vorzugsweise in Form eines Schiebers zum druckdichten Verschließen der Führungsanordnung ausgebildet ist. Für das Arbeitsgerät kann weiterhin ein mit der Führungsanordnung an deren dem Einbringabschnitt abgewandten Ende verbindbarer Transport-/Lagerbehälter vorgesehen sein. Nach Anbringen des Transport-/Lagerbehälters und ggf. Öffnen des Verschließmittels ist das Arbeitsgerät vorzugsweise aus dem Transport-/Lagerbehälter durch die Führungsanordnung in die Rohrleitung injizierbar.

Im Zuge einer bevorzugten Weiterentwicklung der erfindungsgemäßen Vorrichtung ist vorgesehen, dass der Transport-/Lagerbehälter auf einer Lasttrageeinrichtung angeordnet ist, so dass auf die Führungsanordnung und die Rohrleitung selbst nur möglichst geringe mechanische Kräfte einwirken. Dabei kann die Lasttrageeinrichtung beweglich, insbesondere fahrbar ausgebildet sein. Bei einer äußerst bevorzugten Weiterbildung der erfindungsgemäßen Vorrichtung handelt es sich bei der Lasttrageeinrichtung um einen Tieflader bzw. einen Tieflade-Anhänger.

Um die Führungsanordnung gegen einen Betriebsdruck in der Rohrleitung in Position halten zu können, weist die erfindungsgemäße Vorrichtung vorzugsweise eine entsprechende Halteeinrichtung auf, die gemäß einer Weiterbildung der erfindungsgemäßen Vorrichtung als von außen auf die Führungsanordnung einwirkende Stempelanordnung ausgebildet sein kann. Gemäß einer Variante der erfindungsgemäßen Vorrichtung ist die Halteeinrichtung zum Einwirken auf die Führungsanordnung im Bereich der Abbiegung des zweiten Rohrteils derselben ausgebildet.

Zum sicheren und definierten Einbringen der Führungsanordnung in die Rohrleitung zeichnet sich eine besonders bevorzugte Ausgestaltung der erfindungsgemäßen Vorrichtung durch eine an der Rohrleitung anbringbare Muffe mit Flanschfortsatz aus, die beim Anbohren der Rohrleitung dauerhaft an dieser befestigt, insbesondere angeschweißt werden kann. Mit dem Flanschfortsatz dieser Muffe sind gemäß einer Weiterbildung der erfindungsgemäßen Vorrichtung das Verschließmittel und die Halteeinrichtung gemeinsam verbindbar, wobei insbesondere das Verschließmittel und die Halteeinrichtung als bauliche Einheit vorliegen können.

Weiterhin ist mit der erfindungsgemäßen Vorrichtung ein Arbeitsgerät in Form eines flexiblen, mehrgliedrigen Molchs verwendbar, dessen Funktionsglieder, wie Zugeinheit, Magnetisieranordnungen, Sensorträger oder dergleichen, in Längsrichtung des Molchs derart ausgebildete Abmessungen aufweisen, dass Rohrleitungsabschnitte mit einem Krümmungsradius in Größenordnung eines Durchmessers der Rohrleitung durchfahrbar sind. Eine derartige Ausbildung des Arbeitsgeräts ist unbedingt erforderlich, um dieses aus dem Transport-/Lagerbehälter durch die Führungsanordnung in die Rohrleitung einbringen zu können.

Ein derartiges Arbeitsgerät weist Funktionsglieder mit jeweils ein- und ausklappbare Tragarmanordnungen für die jeweiligen Funktionselemente, wie Dichtmanschetten, Magnetisierer oder Sensoren, auf. Auf diese Weise lassen sich die Form und insbesondere der Durchmesser der Funktionsglieder des Arbeitsgerätes flexibel anpassen, so dass ein Umfahren von Hindernissen in der Rohrleitung, wie im Einbringabschnitt der Führungsanordnung in die Rohrleitung, möglich ist. Darüber hinaus lässt sich ein derartiges Arbeitsgerät auch im Zuge sogenannter "Multidiameter"-Anwendungen einsetzen, bei denen eine Rohrleitung bekannter oder unbekannter Weise einen nicht konstanten Durchmesser aufweist, wobei die genannten Tragarmanordnungen dafür sorgen, dass die Funktionselemente jederzeit ihren optimalen Arbeitsabstand von der Wandung der Rohrleitung einnehmen.

Aus Sicherheitsgründen kann das Arbeitsgerät zwei hintereinander angeordnete Zugeinheiten aufweisen, bei denen es sich im Zuge einer passiven Ausgestaltung des Arbeitsgeräts um herkömmliche Dichtmanschetten handeln kann, die durch den Druck des durch die Rohrleitung strömenden Mediums für eine Fortbewegung des Arbeitsgeräts sorgen. Alternativ können die Zugeinheiten als aktiv angetriebene Traktoren ausgebildet sein und entsprechende Antriebseinrichtungen, wie Räder, Motoren und eine entsprechende Energieversorgung, aufweisen. Erfindungsgemäß möglich ist auch das Vorsehen "intelligenter" Zugeinheiten in Form von Robotern, die insbesondere eine selbständige Anpassung an die Rohrleitungsgeometrie vornehmen können.

Sofern beim Inspizieren der Rohrleitung magnetische Inspektionstechniken, wie Magnetic Flux Leakage, zum Einsatz kommen, so dass entsprechende Magnetisieranordnungen am Arbeitsgerät vorhanden sind, sieht eine Weiterentwicklung des Arbeitsgeräts mit einer erfindungsgemäßen Vorrichtung vor, dass die Magnetisieranordnungen aus gegenüber herkömmlichen Magnetisieranordnungen verkürzten Magnetisierern gebildet sind. Dabei werden hier und im Folgenden unter "herkömmlichen" Magnetisieranordnungen Anordnungen aus normalerweise für einen gegebenen Rohrleitungs-Durchmesser verwendeten Magnetisierern bestimmter Länge verstanden. Durch das Verwenden kleinerer Magnete für einen gegebenen Durchmesser steht naturgemäß weniger magnetische Leistung für die Rohrleitungs-Inspektion zur Verfügung, wobei jedoch die ggf. vorhandenen Nachteile in Punkto Messgenauigkeit hinter die gewonnene, erfindungsgemäß unabdingbare Flexibilität der Anordnung zurücktreten.

Um den Verschleiß des Arbeitsgeräts im Bereich der Magnetisieranordnungen insbesondere mit Blick auf einen aktiven Molch mit Traktor-Zugeinheiten zu verringern, können in die Magnetisieranordnungen Rollmittel integriert sein.

Zwecks einer vollständigen Abdeckung der Rohrleitungs-Wandung im Rahmen von "Multidiameter"-Anwendungen zeichnet sich ein derartiges Arbeitsgerät dadurch aus, dass wenigstens zwei hintereinander angeordnete Magentisieranordnungen vorhanden sind, deren Magnetisierer in Umfangsrichtung versetzt angeordnet sind.

Weitere Vorteile und Eigenschaften der Erfindung ergeben sich aus der nachfolgenden Beschreibung von Ausführungsbeispielen anhand der Zeichnung. Es zeigt:
- Fig. 1: anhand einer schematischen Darstellung eine erfindungsgemäße Vorrichtung zur Durchführung eines erfindungsgemäßen Verfahrens;
- Fig. 2: in einer perspektivischen Gesamteinsicht die Lasttrageeinrichtung aus Fig. 1;
- Fig. 3: einen Querschnitt durch eine erfindungsgemäße Führungsanordnung;
- Fig. 4: eine Seitenansicht der Führungsanordnung gemäß Fig. 3;
- Fig. 5a,b: Detailansichten einer erfindungsgemäßen Führungsanordnung;
- Fig. 6: in einer Querschnittsdarstellung ein Arbeitsgerät beim Einbringen in eine Rohrleitung unter Verwendung einer erfindungsgemäßen Führungsanordnung;
- Fig. 7a: ein erfindungsgemäßes Arbeitsgerät in einer ersten Darstellung;
- Fig. 7b: das Arbeitsgerät der Fig. 7a in einer weiteren Darstellung;
- Fig. 8a: ein weiteres erfindungsgemäßes Arbeitsgerät;
- Fig. 8b: das Arbeitsgerät der Fig. 8a in einer weiteren Darstellung; und
- Fig. 9: ein Ablaufdiagramm eines erfindungsgemäßen Verfahrens.

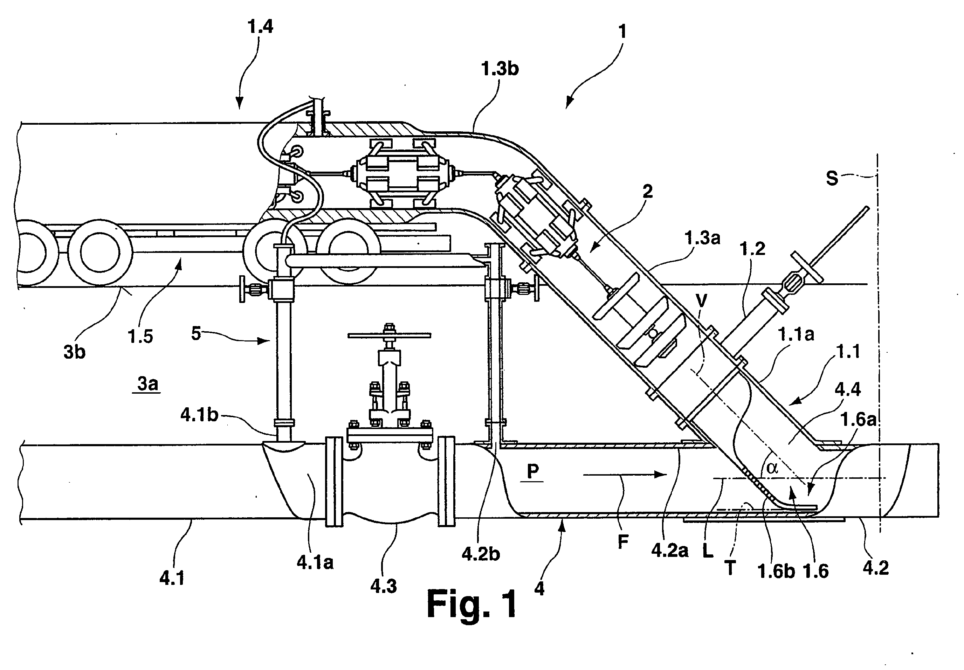

Die Fig. 1 erläutert schematisch die Durchführung eines erfindungsgemäßen Verfahrens unter Verwendung einer erfindungsgemäßen Vorrichtung 1. Dargestellt ist zunächst eine im Erdreich 3a, d.h. unterhalb der Erd- oder einer Fahrbahnoberfläche 3b verlegte Rohrleitung 4, hier: eine in Richtung des Pfeils F von einem gasförmigen Fluid durchströmte Gaspipeline, in der das Gas unter einen Betriebsdruck p steht.

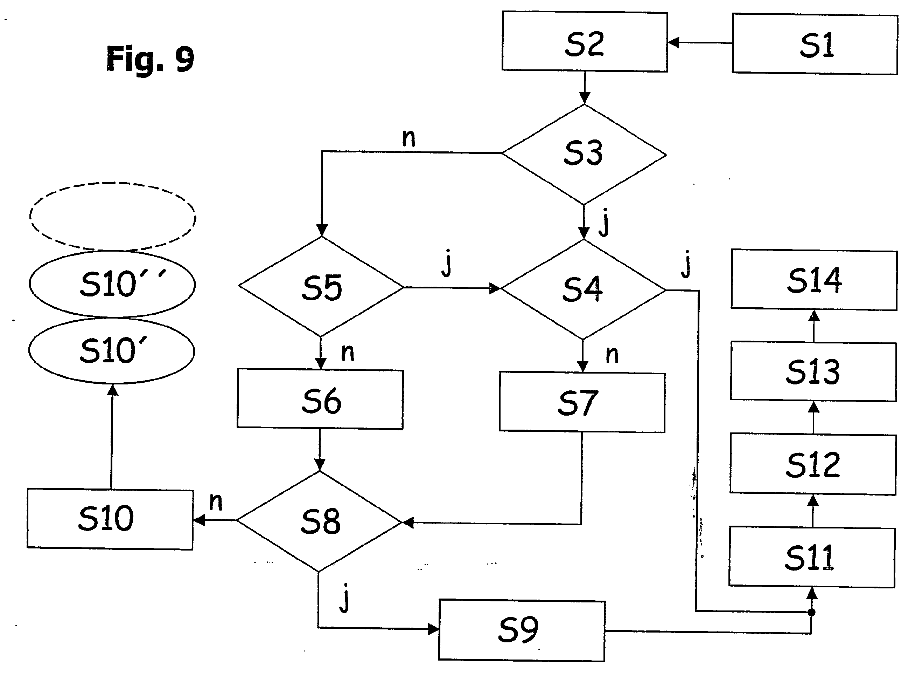

Die Rohrleitung 4 ist gemäß der Fig. 1 aus mehreren Teilstücken 4.1, 4.2 gebildet, die über ein Ventil 4.3 verbunden sind. Aufgrund von Querschnittsverengungen der Rohrleitung 4 im Inneren des Ventils 4.3 wird eine derartige Rohrleitung 4 auch als nicht molchbar ("unpiggable") bezeichnet. Die Teilstücke 4.1, 4.2 der Rohrleitung 4 weisen an ihrer Wandung 4.1a, 4.2a radial abgehende Abzweige 4.1b, 4.2b auf. Die Abzweige 4.1b, 4.2b können nachträglich an der Rohrleitung 4 angebracht worden sein (s.u.) und sind gemäß der Darstellung in Fig. 1 zu Inspektionszwecken im Rahmen einer Vorerkundung (s.u.; Fig. 9) mit einer Rohr-Ventil-Anordnung 5 verbunden.

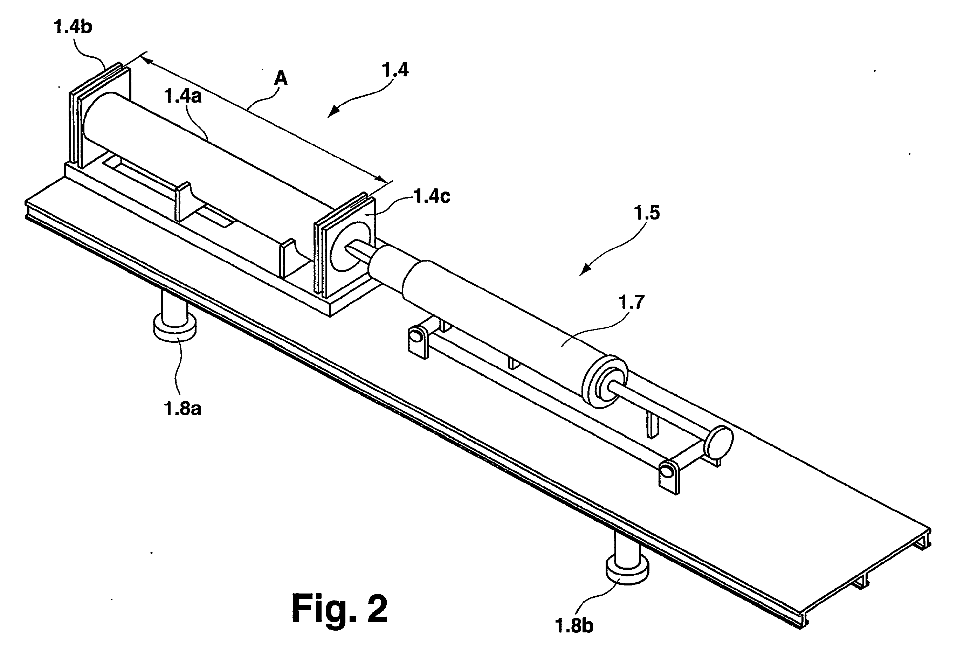

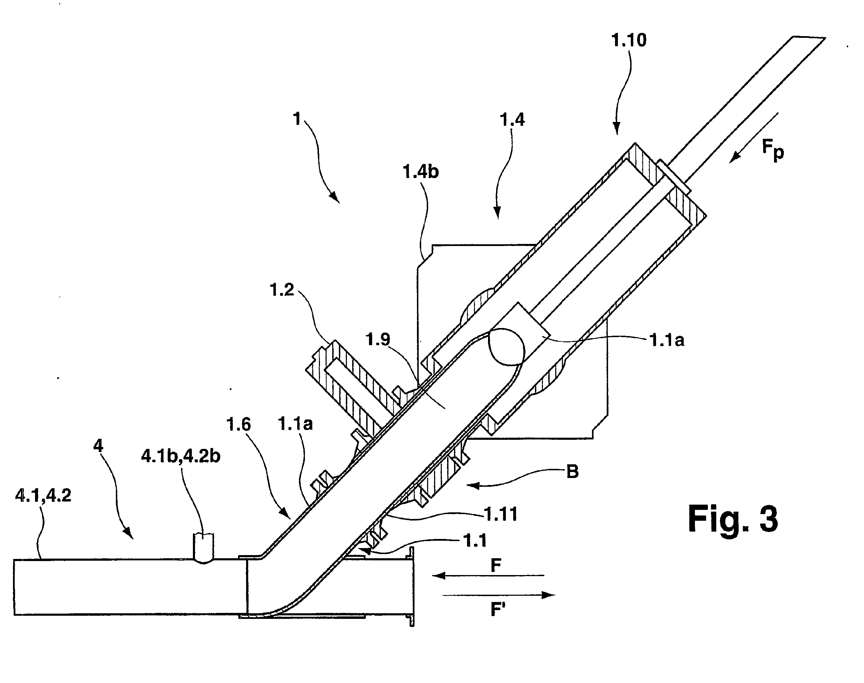

Um aus Gründen einer Kostenersparnis auch in grundsätzlich nicht molchbaren Rohrleitungen 4 Inspektions- und Wartungsarbeiten mittels molchartiger Arbeitsgeräte 2 durchführen zu können, kommt die in der Fig. 1 schematisch dargestellte, erfindungsgemäße Vorrichtung 1 zum Einsatz, die nachfolgend insbesondere anhand der Fig. 3 bis 6 noch eingehender beschrieben wird: Diese umfasst zunächst eine Muffe 1.1 mit Flanschfortsatz 1.1a, die am Ort eines Anbohrlochs 4.4 der Rohrleitung 4 an Letzterer befestigt ist, vorzugsweise durch Verschweißen. Eine Verlaufsrichtung V des rohrartigen Flanschfortsatzes 1.1a und die Längsachse L der Rohrleitung 4 schließen dabei einen Winkel α ein, wobei α beim dargestellten Ausführungsbeispiel vorzugsweise etwa 45° beträgt. An den Flanschfortsatz 1.1a ist gemäß der in Fig. 1 darstellten Ausgestaltung ein Verschließmittel in Form eines Schiebers 1.2 angeflanscht, durch den sich das Anbohrloch 4.4 der Rohrleitung 4 bzw. der Flanschfortsatz 1.1a (ein sogenannter "Hot Tap") druckdicht verschließen lässt. An den Schieber 1.2 schließen sich beim Ausführungsbeispiel der Fig. 1 weitere, ggf. flexible Rohrteile 1.3a, 1.3b an, über die der Flanschfortsatz 1.1a bzw. die Rohrleitung 4 mit einem Transport-/Lager-behälter 1.4 für das Arbeitsgerät 2 in Verbindung stehen. Der Transport-/Lagerbehälter 1.4 ist auf einer fahrbaren Lasttrageeinrichtung in Form eines Tiefladers 1.5 angeordnet. Aus dem Transport-/LagerBehälter 1.4 ist das Arbeitsgerät 2 mittels der erfindungsgemäßen Vorrichtung 1 in die Rohrleitung 4 injizierbar, wie nachfolgend anhand der Fig. 2 noch detaillierter dargestellt wird.

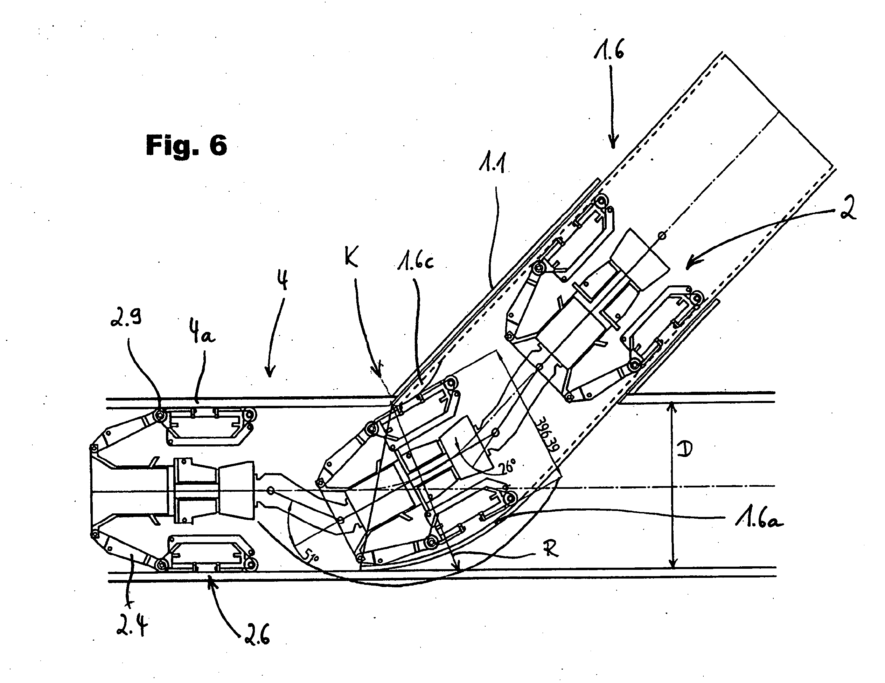

Zum sicheren und definierten Einbringen des Arbeitsgeräts 2 in die Rohrleitung 4 weist die erfindungsgemäße Vorrichtung 1 gemäß der Fig. 1 weiterhin ein als Teil einer Führungsanordnung (vgl. hierzu detailliert die Fig. 3 bis 6) fungierendes weiteres Rohrteil 1.6, das einen gekrümmten Fortsatz 1.6a aufweist, der im gezeigten, eingebrachten Zustand in einem dem Anbohrloch 4.4 der Rohrleitung 4 gegenüber liegenden Bereich der Rohrwandung 4.2a an dieser anliegt, wobei der gekrümmte Fortsatz 1.6a in diesem Bereich eine im wesentlichen zu der Rohrleitungs-Längsachse L parallele Tangente T aufweist. Im Bereich des Fortsatzes 1.6a weist das Rohrteil 1.6 weiterhin Durchbrüche 1.6b auf, damit das Medium in der Rohrleitung 4 den Fortsatz 1.6a in Pfeilrichtung F ungehindert passieren bzw. durchströmen kann. Erfindungsgemäß weist das Rohrteil (1.6) diametral gegenüber dem Fortsatz (1.6a) eine Innenauswölbung (1.6c) auf, wie in Figur 6 detailliert gezeigt.

Verfahrensmäßig wird demnach, ggf. nach einer entsprechenden Vorerkundung über die Abzweige 4.1b, 4.2b und die Rohr-Ventil-Anordnung 5, die Rohrleitung 4 beispielhaft unter einem Winkel α ≈ 45° angebohrt (Anbohrloch 4.4); dabei wird im Bereich des Anbohrlöches 4.4 die Muffe 1.1 mit Flanschfortsatz 1.1a und daran befestigtem Schieber 1.2 zum Verschließen des Anbohrloches 4.4 gesetzt. Über weitere, im Folgenden noch detailliert beschriebene Rohrteile 1.3a, 1.3b steht somit die Rohrleitung 4 bei geöffnetem Schieber 1.2 mit dem Transport-/Lagerbehälter 1.4 für das erfindungsgemäße Arbeitsgerät 2 in Verbindung.

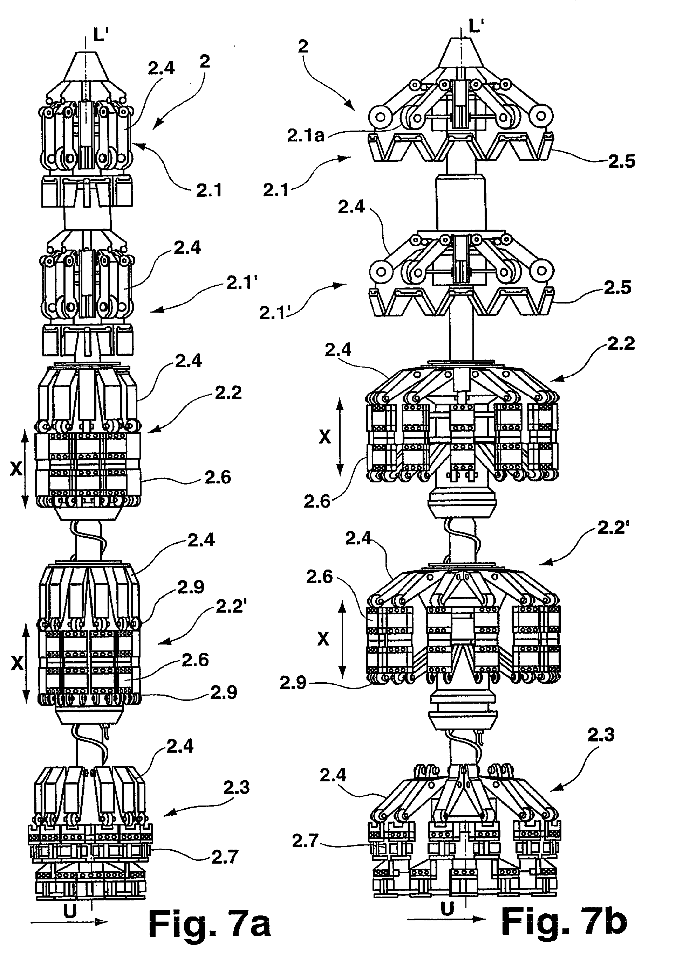

Bei dem Arbeitsgerät 2 handelt es sich um ein molchartiges Arbeitsgerät, das nachfolgend anhand der Fig. 7a bis 8b noch detailliert beschrieben wird. Grundsätzlich kann es sich bei dem Arbeitsgerät jedoch um einen Molch beliebiger Funktionalität handeln, beispielsweise um einen Reinigungsmolch, einen Vermessungsmolch (Caliper Pig), einen Inspektionsmolch (z.B. mit Magnetisierern und Magnetfeldsensoren) oder dergleichen.

Das Rohrteil 1.6 dient aufgrund seiner speziellen Ausgestaltung mit gekrümmten Fortsatz 1.6a dazu, das Arbeitsgerät 2 um die Abbiegung bzw. den "Knick" zwischen der eingesetzten Vorrichtung 1 und der Rohrleitung 4 im Bereich des Anbohrlochs 4.4 herum zu führen, ohne dass Arbeitsgerät 2 dabei beschädigt wird oder festklemmt.

Die schematische Darstellung der Fig. 1 zeigt den Einsatz einer erfindungsgemäßen Vorrichtung 1 zum Einschleusen des Arbeitsgeräts 2 in die nicht molchbare Rohrleitung 4. Zum Entnehmen des Arbeitsgeräts 2 aus der Rohrleitung 4 ist entsprechend weiter stromabwärts in Richtung des Pfeils F eine an einer vertikalen Spiegelachse F gespiegelte Anordnung vorzusehen. Es ist weiterhin erfindungsgemäß auch möglich, nicht molchbare Passagen der Rohrleitung 4, wie das Ventil 4.3, durch Vorsehen eines weiteren Anbohrlochs (nicht gezeigt) im Bereich des Teilstücks 4.1 der Rohrleitung 4 und unter Verwendung den Rohrteilen 1.3a, 1.3b entsprechender weiterer Rohrteile nach Art eines molchbaren Bypasses zu umgehen.

Die Fig. 2 zeigt in einer perspektivischen Gesamtansicht detailliert eine weitere Ausgestaltung des Transport-/Lagerbehälters 1.4 für das Arbeitsgerät 2 (vgl. Fig. 1) sowie die zugehörige Lasttrageeinrichtung 1.5, die weiterhin gemäß der Darstellung in Fig. 1 auf einem fahrbaren Untersatz nach Art eines Tiefladers angeordnet sein kann. Der Transport-/Lagerbehälter 1.4 besitzt gemäß Fig. 2 im wesentlichen das Aussehen eines weiteren Rohrabschnitts 1.4a, dessen Längsabmessung A zumindest der Länge des Arbeitsgeräts 2 entspricht. Der Behälter 1.4 weist an seinen Enden Flanschen 1.4b, 1.4c auf, wobei der Flansch 1.4b zum Verbinden des Behälters 1.4 mit weiteren Elementen der erfindungsgemäßen Vorrichtung 1 (vgl. Fig. 1) dient.

Weiterhin ist aus der Lasttrageeinrichtung 1.5 nach Art einer "Injektionsnadel" ein vorzugsweise pneumatisch oder hydraulisch betriebener Zylinder 1.7 angeordnet, der zum Injizieren des Arbeitsgeräts 2 (vgl. Fig. 1) aus dem Behälter 1.4 in die Rohrleitung 4 dient.

Darüber hinaus besitzt die Lasttrageeinrichtung 1.5 gemäß der gezeigten Ausgestaltung eine Anordnung von vorzugsweise hydraulisch oder pneumatisch betriebenen Teleskopbeinen 1.8a, 1.8b, durch die sich eine Lage der Lasttrageeinrichtung 1.5 und insbesondere des Behälters 1.4 derart einstellen lässt, dass sich in der erfindungsgemäßen Vorrichtung 1 gemäß der Fig. 1 möglichst geringe mechanische Spannungen ergeben und dass weiterhin im Bereich der Muffe 1.1 bzw. des Anbohrlochs 4.4 nur eine möglichst geringe Last-Hebelwirkung aufgrund der weiteren Elemente der Vorrichtung 1 und des einzubringenden Arbeitsgeräts 2 resultiert. Auf diese Weise ist während der Durchführung des erfindungsgemäßen Verfahrens eine größtmögliche Betriebssicherheit der Pipeline garantiert.

Die Fig. 3 zeigt in einer detaillierten Schnittdarstellung nochmals eine Ausgestaltung der erfindungsgemäßen Vorrichtung 1 (vgl. Fig. 1). Bei einer angenommenen Strömungsrichtung F durch die Rohrleitung 4 ist die erfindungsgemäße Vorrichtung 1 dabei analog zur Darstellung der Fig. 1 zum Einbringen eines Arbeitsgeräts in die Rohrleitung 4 ausgebildet; im Falle einer angenommenen Strömungsrichtung F' durch die Rohrleitung 4 dient die in der Fig. 3 gezeigte Vorrichtung 1 dagegen zum Aufnehmen eines durch die Rohrleitung 4 bewegten Arbeitsgeräts, beispielsweise nach erfolgter Reinigung oder Vermessung der Rohrleitung 4.

Grundsätzlich entspricht die in der Fig. 3 gezeigte Ausgestaltung der erfindungsgemäßen Vorrichtung 1 derjenigen der Fig. 1, wobei einander entsprechende Bestandteile mit denselben Bezugszeichen versehen sind. In Abweichung von der eher schematischen Darstellung der Fig. 1 weist der Gegenstand der Fig. 3 jedoch im Anschluss an das erste Rohrteil 1.6 mit gekrümmtem Fortsatz 1.6a (vgl. Fig. 1) ein weiteres, gekrümmtes Rohrteil 1.9 auf, das sich an das erste Rohrteil 1.6 anschließt. Dabei nimmt das weitere Rohrteil 1.9 zunächst den Verlauf V (vgl. Fig. 1) des ersten Rohrteils 1.6 auf und biegt dann im wesentlichen rechtwinklig nach hinten in die Zeichenebene ab, so dass in einer angenommenen Draufsicht ein im wesentlichen L-förmiger Verlauf der aus den Rohrteilen 1.6 und 1.9 bestehenden Anordnung resultiert. An das Rohrteil 1.9 schließt sich an dessen dem ersten Rohrteil 1.6 und damit dessen Einbringabschnitt in die Rohrleitung 4 abgewandten Ende der Transport-/Lagerbehälter 1.4 an. Demnach übernimmt das Rohrteil 1.9 gemäß der in Fig. 3 gezeigten Ausgestaltung funktionell im wesentlichen die Rolle der in Fig. 1 gezeigten Rohrteile 1.3a und 1.3b.

Der bereits anhand der Fig. 1 erläuterte Schieber 1.2 ist gemäß der Ausgestaltung der Fig. 3 in einem Fügebereich B zwischen dem ersten 1.6 und dem zweiten Rohrteil 1.9 angeordnet und ermöglicht so wiederum ein druckfestes Verschließen der als Führungsanordnung für das Arbeitsgerät 2 (vgl. Fig. 1) fungierenden Anordnung der beiden Rohrteile 1.6, 1.9.

Die Ausgestaltung der erfindungsgemäßen Vorrichtung 1 nach- Fig. 3 besitzt den Vorteil, dass der Behälter 1.4 für das Arbeitsgerät 2 und die (nicht gezeigte) Lasttrageeinrichtung 1.5 nicht in einem Bereich oberhalb der Rohrleitung 4, sondern seitlich bzw. nach hinten versetzt zu dieser angeordnet sind, wodurch mechanische Einwirkungen auf die Rohrleitung 4 minimiert werden.

Um die Anordnung der Rohrteile 1.6, 1.9 gegen den Betriebsdruck p in der Rohrleitung 4 in Stellung zu halten, ist gemäß der Fig. 3 im Bereich der Abbiegung des Rohrteils 1.9 eine Halteeinrichtung in Form eines (Hydraulik-)Stempels 1.10 vorgesehen, der gemäß der Darstellung gemeinsam mit dem Schieber 1.2 am Flanschfortsatz 1.1a der Muffe 1.1 angeflanscht ist. Zusätzlich ist die Halteeinrichtung 1.10 vorzugsweise in nicht gezeigter Weise mit dem Behälter 1.4 bzw. der Lasttrageeinrichtung 1.5 verbunden, so dass nicht die Muffe 1.1 bzw. die Rohrleitung 4 das Gewicht der Anordnung aus Schieber 1.2 und Halteeinrichtung 1.10 zu tragen hat.

Der Stempel 1.10 wirkt gemäss der Darstellung in Figur 3 mittels seines Stempelkörpers 1.10a auf das Rohrteil 1.9 im Bereich dessen Abbiegung ein und vermittelt diesem eine Kraft Fₚ in Richtung des in Figur 3 gezeigten Pfeils, durch die die aus den Rohrteilen 1.6, 1.9 gebildete Führungsanordnung für das Arbeitsgerät 2 gegen den Betriebsdruck p in der Rohrleitung 4 in Position gehalten ist.

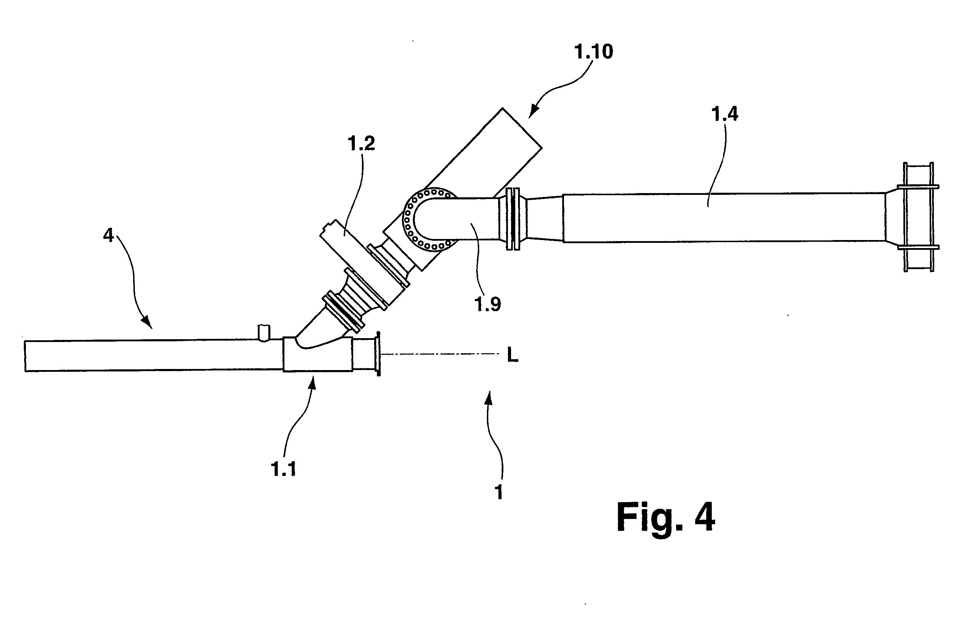

Die Figur 4 zeigt eine alternative Ausgestaltung der erfindungsgemäßen Vorrichtung 1, wobei abweichend von der Darstellung in der Figur 3 der Transport-/Lagerbehälter 1.4 für das Arbeitsgerät 2 parallel zur Rohrleitungs-Längsachse L ausgerichtet ist. Dies wird im wesentlichen dadurch erreicht, dass das zweite Rohrteil 1.9 bei der Ausgestaltung gemäss der Figur 4 eine weitere 90°-Abbiegung (aus der Ebene kommend nach rechts) aufweist. Eine derartige Ausgestaltung stellt entsprechend hohe Anforderungen an die Flexibilität eines im Rahmen der vorliegenden Erfindung einsetzbaren Arbeitsgeräts (vergleiche Figuren 7a bis 8b).

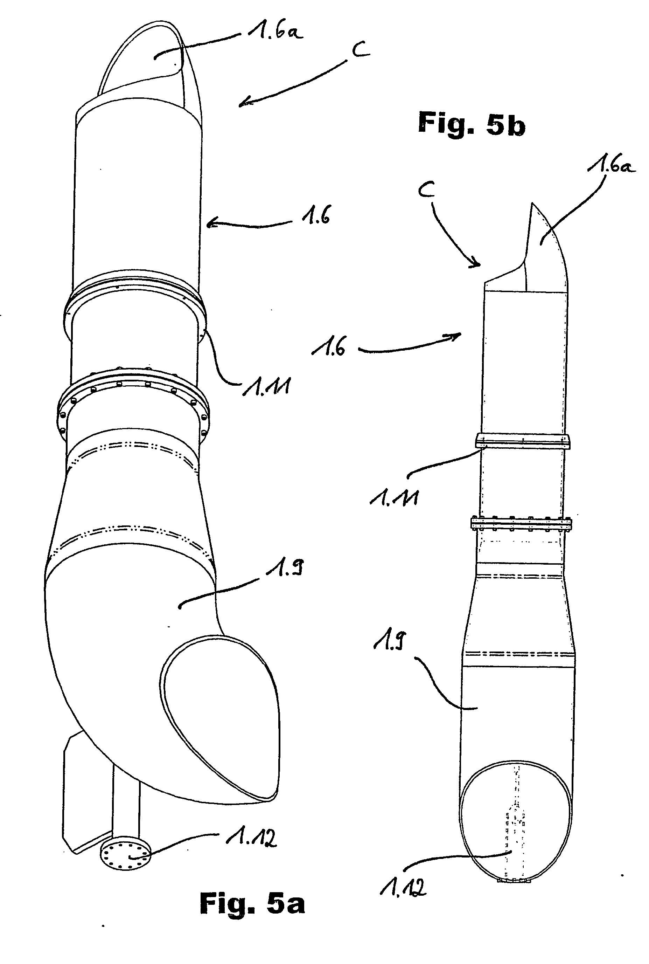

Die Figuren 5a,b zeigen nochmals detailliert eine mögliche Ausgestaltung der erfindungsgemäß aus den Rohrteilen 1.6 und 1.9 (vergleiche Figur 3) gebildeten Führungsanordnung der Vorrichtung 1. Gut zu erkennen ist in den Figuren 5a,b die gekrümmte, speziell rinnen- oder löffelförmige Ausbildung des Fortsatzes 1.6a des ersten Rohrteils 1.6 in dessen Einbringabschnitt C, d.h. demjenigen Abschnitt des Rohrteiles 1.6., der zur Durchführung des erfindungsgemäßen Verfahrens bzw. bei der Verwendung der erfindungsgemäßen Vorrichtung 1 in die Rohrleitung 4 (vergleiche Figur 1) eingebracht wird.

Auf dem ersten Rohrteil 1.6 kann gemäß der Ausgestaltung der Figuren 5a,b ein ringförmiger Dichtkörper 1.11 angeordnet sein, so daß gemäß der Darstellung in Figur 3 kein Fluid aus der Rohrleitung 4 am Rohrteil 1.6 vorbei in hinter den Dichtkörper 1.11 liegende Bereiche der erfindungsgemäßen Vorrichtung 1, wie das Innere des Schiebers 1.2 oder Halteeinrichtung 1.10 gelangen kann.

Das zweite Rohrteil 1.9 weist im Bereich seiner Abbiegung einen gegenüber dem ersten Rohrteil 1.6 vergrößerten Durchmesser auf, um ein Durchgehen des Arbeitsgeräts in diesem Bereich zu erleichtern. Ebenfalls im Bereich seiner Abbiegung weist das Rohrteil 1.9 einen stempelförmigen Ansatz 1.12 auf, der als Anlagefläche für einen entsprechend ausgeformten Stempelkörper 1.10a (vergleiche Figur 3) der Halteeinrichtung 1.10 dient, um die aus dem Rohrteil 1.6 und 1.9 gebildete Führungsanordnung in Position zu halten.

Die Figur 6 zeigt ein Arbeitsgerät 2 (vergleiche Figuren 7a-8b) beim Einfahren in eine Rohrleitung 4 unter Verwendung einer anhand der vorangehenden Figuren eingehend erläuterten erfindungsgemäßen Vorrichtung 1 mit erstem Rohrteil 1.6. Der Krümmungsradius R im Bereich des "Knicks" zwischen dem Rohrteil 1.6 und der Rohrleitung 4 beträgt gemäss der Figur 6 nur wenig mehr als der Durchmesser D der Rohrleitung 4.

Um weiterhin Beschädigungen des Arbeitsgeräts im Bereich einer Kante K des Anbohrlochs 4.4 (vergleiche Figur 1) der Rohrleitung 4 zu vermeiden besitzt erfindungsgemäß das Rohrteil 1.6 eine sich vorzugsweise über einen Teil seines Umfangs erstreckende, dem Fortsatz 1.6a im wesentlichen diametral gegenüber angeordnete Innenauswölbung 1.6c, die - wie in der Figur 6 gezeigt - derart ausgebildet und angeordnet ist, dass das Arbeitsgerät 2 ab Einfahren in die Rohrleitung 4 im Bereich der Kante K von der Wandung 4a der Rohrleitung 4 frei kommt.

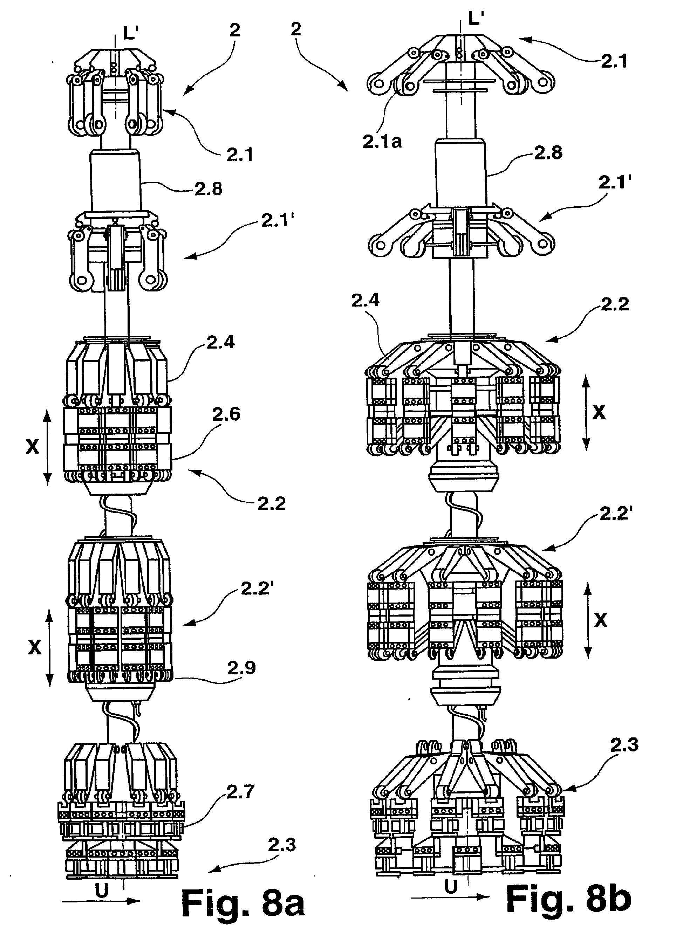

Die Figuren 7a,b und 8a,b zeigen detailliert mögliche Ausgestaltungen eines Arbeitsgeräts 2 zum Einbringen in eine in Betrieb befindliche Rohrleitung 4, wie eine.Gaspipeline oder Ölpipeline, insbesondere gemäss eines erfindungsgemäßen Verfahrens und/oder unter Verwendung einer erfindungsgemäßen Vorrichtung 1, wie vorstehend anhand der Figuren 1 bis 6 detailliert beschrieben. Das Arbeitsgerät 2 besitzt die Form eines flexiblen (vergleiche Figur 6), mehrgliedrigen Molchs, dessen Funktionsglieder, wie Zugeinheit 2.1, 2.1', Magnetisieranordnungen 2.2, 2.2', Sensorträger 2.3 oder dergleichen, in Längsrichtung L' des Molchs 2 derart ausgebildete Abmessungen X aufweisen, dass Abschnitte der Rohrleitung 4 mit einem Krümmungsradius R in Größenordnung eines Durchmessers D der Rohrleitung 4 mit dem Arbeitsgerät 2 durchfahrbar sind (vergleiche Figur 6). Zu diesem Zweck weist das erfindungsgemäße Arbeitsgerät 2 in allen seinen Funktionsgliedern 2.1, 2.1', 2.2, 2.2', 2.3 jeweils Anordnungen aus ein- und ausklappbaren Tragarmen 2.4 auf, an deren Enden die jeweiligen Funktionselemente, wie Dichtmanschetten 2.5, Magnetisierer 2.6 oder (Magnetfeld-)Sensoren 2.7, angeordnet sind.

Von entscheidender Bedeutung ist eine gegenüber herkömmlichen Arbeitsgeräten verkürzte Ausbildung X der Magnetisierer 2.6. Sind diese in Richtung der Molch-Längsachse L' zu lang ausgebildet, so ist ein Durchfahren enger Rohrleitungsbögen gemäss der Figur 6 nicht mehr möglich.

Die Figuren 7a und 7b bzw. die Figuren 8a und 8b zeigen jeweils ein und dasselbe Arbeitsgerät 2 mit den Tragarmen 2.4 jeweils in ein- bzw. ausgeklappter Stellung. Durch diese besondere Ausgestaltung kann das Arbeitsgerät 2 nicht nur gemäss der Figur 6 Rohrleitungsbögen mit engen Krümmungsradien R durchfahren, wobei die Tragarme 2.4 eingeklappt werden, sondern ist darüber hinaus in der Lage, allgemein Rohrleitungen 4 mit veränderlichem Querschnitt/ Durchmesser zu bearbeiten ("Multidiameter"-Anwendungen).

Gemäss den Figuren 7a,b können die aus Sicherheitsgründen gedoppelten Zugeinheiten 2.1, 2.1' als passive Zugeinheiten mit den bereits beschriebenen Dichtmanschetten 2.5 ausgebildet sein, so dass sich das Arbeitsgerät passiv, d.h. durch das strömende Medium mitbewegt durch die Rohrleitung 4 vorwärts bewegt. Alternativ kann es sich gemäss den Figuren 8a und 8b bei den Zugeinheiten 2.1, 2.1' des Arbeitsgeräts 2 um aktiv angetriebene Traktoren handeln, bei denen entsprechend Rollen 2.1a durch zugehörige Motormittel (nicht gezeigt) zum aktiven Vorwärtsbewegen des Arbeitsgerätes 2 durch die Rohrleitung 4 angetrieben werden. Insbesondere zu diesem Zweck weist das Arbeitsgerät 2 weiterhin einen Batteriekörper 2.8 auf, der jedoch auch zur Energieversorgung für die weiteren elektrischen bzw. elektronischen Bestandteil des Arbeitsgeräts 2, wie die Magnetisierer 2.6 oder die Sensoren 2.7, dient.

Wie weiterhin aus den Figuren 7a bis 8b erkennbar ist, besitzt das Arbeitsgerät 2 wenigstens zwei hintereinander Magnetisieranordnungen 2.2, 2.2', deren Magnetisierer 2.6 in Umfangsrichtung U gegeneinander versetzt angeordnet sind. Auf diese Weise ergibt sich auch bei aufgeklappten Tragarmen 2.4 (vergleiche Figuren 7b, 8b) eine vollständige Abdeckung der Rohrleitungswandung, was eine weitere Voraussetzung für das Bearbeiten von Rohrleitungen mit veränderlichem Durchmesser D, insbesondere zwischen 26 und 28 Zoll, ist.

Gemäss den gezeigten Ausgestaltungen des Arbeitsgeräts 2 sind weiterhin in die Magnetisieranordnungen 2.2, 2.2' Rollen 2.9 integriert, die bei Betrieb des Arbeitsgeräts 2 an der Rohrleitungswandung 4a anliegen (vergleiche Figur 6). Auf diese Weise werden Reibung und Verschleiß vermindert, was insbesondere bei aktiv angetriebenen Arbeitsgeräten 2 (vergleiche Figuren 8a und 8b) von Bedeutung ist. Schließlich zeigt die Figur 9 anhand eines Ablaufdiagramms den Ablauf eines erfindungsgemäßen Verfahrens zum Sammeln von Daten betreffend eine in Betrieb befindliche Rohrleitung 4, wie eine Gaspipeline oder dergleichen. Das Verfahren beginnt in Schritt S1 damit, dass die Rohrleitung 4 (vergleiche Figur 1) lokal freigelegt und von ggf. vorhandenen Beschichtungen befreit wird. Im gleichen Verfahrenschritt S1 werden anschließend Tests durchgeführt, um den Zustand der Rohrleitung 4 und deren Eignung für das Anbringen eines "Hot Tap" zu ermitteln. In einem anschließenden Verfahrensschritt S2 wird dann eine Vorerkundung zum Ermitteln eines Verschmutzungsgrads und/oder eines geometrischen Zustands der Rohrleitung durchgeführt. Dazu wird ein "Hot Tap" mit einem Durchmesser zwischen 4 und 10 Zoll, vorzugsweise zwischen 6 und 8 Zoll an der Rohrleitung angebracht. Alternativ kann auch, wie in Figur 1 gezeigt, ein existierender Zugang zur Rohrleitung 4 (Abzweig) verwendet werden. Auf diese Weise wird ein Vorerkundungswerkzeug in die Rohrleitung eingebracht und durch denselben "Hot Tap" wieder entnommen. Ein derartiges Vorerkundungswerkzeug besitzt typischerweise eine Kamera und Vermessungssensoren und soll Verschmutzungen, Verformungen und Verstopfungen der Rohrleitung ausfindig machen. Die von dem Werkzeug gelieferten Daten werden vorzugsweise in Echtzeit analysiert, so dass eine Einschätzung des Zustands der Rohrleitung möglich ist. Erfahrungsgemäß erfolgt anschließend in Schritt S3 eine Abfrage der genannten Daten dahingehend, ob die Rohrleitung sauber ist. Wird die Abfrage in Schritt S3 bejaht (j), so folgt in Schritt S4 eine nächste Abfrage dahingehend, ob die Geometrie der Rohrleitung in Ordnung ist oder ob Beschädigungen und Verformungen vorliegen. Im Falle einer verneinten Abfrage in Schritt S3 (n) erfolgt in Schritt S5 eine Abfrage.dahingehend, ob sich die Verschmutzungen in der Rohrleitung mit konventionellen Reinigungsverfahren beseitigen lassen. Bei derartigen Verfahren kann es sich beispielsweise um den Einsatz von Metallbürsten oder von Chemikalien zur Reinigung der Rohrleitung handeln.

Wird die Abfrage in Schritt S5 bejaht, so folgt anschließend die bereits erläuterte Abfrage in Schritt S4. Wird jedoch die Abfrage in Schritt S5 verneint, so ist es erforderlich, in Schritt S6 ein spezielles Reinigungsprogramm gemeinsam mit dem Kunden zu erarbeiten. Entsprechend ist es im Falle einer verneinten Abfrage in Schritt S4 erforderlich, in Schritt S7 ein entsprechendes Reparaturprogramm für die Rohrleitungsgeometrie zu entwickeln. Sowohl an den Verfahrensschritt S6 als auch an den Verfahrensschritt S7 anschließend erfolgt dann in Schritt S8 eine Abfrage dahingehend, ob das erarbeitete Programm bzw. die erarbeiteten Programme kosteneffizient durchführbar sind. Ist dies der Fall, erfolgt in einem anschließenden Verfahrensschritt S9 die Durchführung der/des entsprechenden Spezialverfahren/s. Im Falle einer verneinten Abfrage in Schritt S8 wird in einem anschließenden Schritt S10 versucht, ein alternatives Programm aufzustellen. Die Möglichkeiten sind hierbei beispielsweise das Schaffen eines direkten Zugangs zur Rohrleitung (Aufgraben, Freilegen; Schritt 10') oder das Durchführen von hydrostatischen Tests, was dem Fachmann bekannt ist (Schritt S10").

Im Falle einer bejahten Abfrage in Schritt S4 bzw. im Anschluss an Schritt S9 erfolgt das Anbringen eines "Hot Tap" voller Größe, d.h. mit einem im wesentlichen dem Durchmesser D der Rohrleitung 4 entsprechenden Querschnitt (vergleiche z.B. Figuren 1, 6). Hierzu wird in Schritt S11 vorzugsweise eine 45°-"Hot Tap"-Muffe installiert und ein Verschließmittel daran befestigt. Bei anderen Einschlagungswinkeln entspricht die Muffe diesen. Anschließend wird die Rohrleitung angebohrt und das Verschließmittel geschlossen. Anschließend wird - wie beispielsweise in der Figur 1 gezeigt - die restliche, erfindungsgemäße Vorrichtung 1 mit dem Verschließmittel verbunden. Letzteres wird geöffnet, und die Führungsanordnung wird in die Rohrleitung eingebracht und dort in Stellung gehalten. Dann wird das Arbeitsgerät aus seinem Transport-/Lager-Behälter 1.4 in die Rohrleitung injiziert, wie vorstehend bereits beschrieben.

Bei dem eingebrachten Arbeitsgerät 2 kann es sich verfahrensgemäß um einen Reinigungsmolch (Schritt S12), einen Vermessungsmolch (Schritt S13) oder einen Inspektionsmolch (Schritt S14) handeln, wie anhand der Figuren 7a bis 8b dargestellt.

Somit ist eine spezifisch an Anforderungen des Kunden orientierte und insbesondere kosteneffiziente Bearbeitung an sich nicht molchbarer Rohrleitungen möglich.

### Bezugszeichenliste

- 1: Vorrichtung
- 1.1: Muffe
- 1.1a: Flanschfortsatz
- 1.2: Schieber
- 1.3a, 1.3b: Rohrteil
- 1.4: Transport-/Lager-Behälter
- 1.4a: Rohr
- 1.4b: Drehflansch
- 1.5: Lasttrageeinrichtung, Tieflader
- 1.6: erstes Rohrteil
- 1.6a: gekrümmter Fortsatz
- 1.6b: Durchbruch
- 1.6c: Innenauswölbung
- 1.7: Zylinder
- 1.8a, 1.8b: Teleskopbein
- 1.9: zweites Rohrteil
- 1.10: Halteeinrichtung, Stempel
- 1.10a: Stempelkörper
- 1.11: Dichtkörper
- 1..12: Ansatz
- 2: Arbeitsgerät, Molch
- 2.1, 2.1': Zugeinheit
- 2.1a: Rad
- 2.2, 2.2': Magnetisieranordnung
- 2.3: Sensorträger
- 2.4: Tragarm
- 2.5: Dichtmanschette
- 2.6: Magnetisierer
- 2.7: Sensor
- 2.8: Batteriekörper
- 2.9: Rolle
- 3a: Erdreich
- 3b: Erdoberfläche
- 4: Rohrleitung
- 4a: Rohrleitungswandung
- 4.1, 4.2: Rohrleitungsteilstück
- 4.1a, 4.2a: Rohrleitungswandung
- 4.1b, 4.2b: Abzweig, "Hot Tap"
- 4.3: Ventil
- 4.4: Anbohrloch
- 5: Rohr-Ventil-Anordnung
- α: Winkel
- A: Abmessung
- B: Fügebereich
- C: Einbringabschnitt
- D: Durchmesser
- F: Strömungsrichtung
- Fₚ: Kraft
- j: bejahte Abfrage
- K: Kante
- L: Rohrleitungs-Längsachse
- L': Längsachse
- n: verneinte Abfrage
- p: Betriebsdruck
- R: Krümmungsradius
- S: Spiegelachse
- S1-S14: Verfahrensschritt
- T: Tangente
- U: Umfangsrichtung
- V: Verlaufsrichtung
- X: Abmessung

## Patentansprüche

1. Vorrichtung zum Einbringen eines molchartigen Arbeitsgeräts in eine in Betrieb befindliche Rohrleitung, wie eine Gaspipeline, mit einer zumindest teilweise in ein Anbohrloch (4.4) der Rohrleitung (4) einbringbaren Führungsanordnung (1.6, 1.9) mit einem im Wesentlichen geraden, zumindest in einem Einbringabschnitt (C) unter einem Winkel (α) zur Rohrleitungs-Längsachse (L) verlaufenden ersten Rohrteil (1.6), das einen gekrümmten, rinnenförmigen Fortsatz (1.6a) aufweist, der im eingebrachten Zustand an einer dem Anbohrloch (4.4) gegenüber liegenden Wandung (4.2a) der Rohrleitung (4) anliegt, **dadurch gekennzeichnet, dass** das Rohrteil (1.6) diametral gegenüber dem Fortsatz (1.6a) eine Innenauswölbung (1.6c) aufweist.

2. Vorrichtung nach Anspruch 1, **dadurch gekennzeichnet, dass** der gekrümmte Fortsatz (1.6a) der Führungsanordnung (1.6, 1.9) im Anlagebereich eine im Wesentlichen zu der Rohrleitungs-Längsachse (L) parallele Tangente (T) aufweist.

3. Vorrichtung nach einem der Ansprüche 1 oder 2, **dadurch gekennzeichnet, dass** die Führungsanordnung (1.6, 1.9) an ihrem dem Einbringabschnitt (C) abgewandten Ende ein weiteres, gekrümmtes Rohrteil (1.9) mit gegenüber der Verlaufsrichtung (V) des ersten Rohrteils (1.6) abbiegendem Verlauf aufweist.

4. Vorrichtung nach Anspruch 3, **dadurch gekennzeichnet, dass** die Abbiegung im Wesentlichen 90° beträgt.

5. Vorrichtung nach Anspruch 3 oder 4, **dadurch gekennzeichnet, dass** im eingebrachten Zustand der Führungsanordnung (1.6, 1.9) das zweite Rohrteil (1.9) an dessen dem ersten Rohrteil (1.6) abgewandten Ende zumindest lokal in einer Ebene im wesentlichen parallel zu einer Verlaufsebene der Rohrleitung (4) ausgerichtet ist.

6. Vorrichtung nach einem der Ansprüche 1 bis 5, **gekennzeichnet durch** ein in einem Fügebereich (B) zwischen dem ersten (1.6) und dem zweiten Rohrteil (1.9) angeordnetes Verschließmittel (1.2).

7. Vorrichtung nach Anspruch 6, **dadurch gekennzeichnet, dass** das Verschließmittel (1.2) als Schieber zum druckfesten Verschließen der Führungsanordnung (1.6, 1.9) ausgebildet ist.

8. Vorrichtung nach einem der Ansprüche 1 bis 7, **gekennzeichnet durch** einen mit der Führungsanordnung (1.6, 1.9) an deren dem Einbringabschnitt (C) abgewandten Ende verbindbaren Transport-/Lagerbehälter (1.4) für das Arbeitsgerät (2).

9. Vorrichtung nach Anspruch 8, **dadurch gekennzeichnet, dass** das Arbeitsgerät (2) aus dem Transport-/Lagerbehälter (1.4) durch die Führungsanordnung (1.6, 1.9) in die Rohrleitung (4) injizierbar ist.

10. Vorrichtung nach Anspruch 8 oder 9, **dadurch gekennzeichnet, dass** der Transport-/Lagerbehälter (1.4) auf einer Lasttrageeinrichtung (1.5) angeordnet ist.

11. Vorrichtung nach Anspruch 10, **dadurch gekennzeichnet, dass** die Lasttrageeinrichtung (1.5) beweglich, insbesondere fahrbar ist.

12. Vorrichtung nach Anspruch 10 oder 11, **dadurch gekennzeichnet, dass** die Lasttrageeinrichtung (1.5) als Tieflader ausgebildet ist.

13. Vorrichtung nach einem der Ansprüche 1 bis 12, **gekennzeichnet durch** eine Halteeinrichtung (1.10) zum Halten der Führungsanordnung (1.6, 1.9) in Position gegen einen Betriebsdruck (P) in der Rohrleitung (4).

14. Vorrichtung nach Anspruch 13, **dadurch gekennzeichnet, dass** die Halteeinrichtung (1.10) als von außen auf die Führungsanordnung (1.6, 1.9) einwirkende Stempelanordnung (1.10, 1.10a) ausgebildet ist.

15. Vorrichtung nach Anspruch 13 oder 14, **dadurch gekennzeichnet, dass** die Halteeinrichtung (1.10) zum Einwirken auf die Führungsanordnung (1.6, 1.9) im Bereich der Abbiegung ausgebildet ist.

16. Vorrichtung nach einem der Ansprüche 1 bis 15, **gekennzeichnet durch** eine an der Rohrleitung (4) anbringbare Muffe (1.1) mit Flanschfortsatz (1.1a), in den die Führungsanordnung (1.6, 1.9) einbringbar.ist.

17. Vorrichtung nach Anspruch 16 mit den kennzeichnenden Merkmalen der Ansprüche 5 und 12, **dadurch gekennzeichnet, dass** das Verschließmittel (1.2) und die Halteeinrichtung (1.10) gemeinsam mit dem Flanschfortsatz (1.1a) verbindbar sind.

18. Vorrichtung nach einem der Ansprüche 1 bis 17, **dadurch gekennzeichnet, dass** der Winkel (α) zwischen 30° und 90° beträgt.

19. Vorrichtung nach Anspruch 18, **dadurch gekennzeichnet, dass** der Winkel (α) etwa 45° beträgt.

20. Verfahren zum Einbringen eines molchartigen Arbeitsgeräts (2) in eine in Betrieb befindliche Rohrleitung, wie eine Fluidleitung, wobei die Rohrleitung während des Betriebs angebohrt, ein Rohrteil (1.6) aufgesetzt und das Arbeitsgerät (2) durch das Anbohrloch (4.4) entlang eines gekrümmten rinnenartigen Fortsatzes (1.6a) des Rohrteils (1.6) eingeschleust wird, **dadurch gekennzeichnet, dass** das Arbeitsgerät beim Einschleusen in die Rohrleitung (4) entlang einer dem Fortsatz (1.6a) diametral gegenüber liegenden Innenauswölbung (1.6c) geführt wird.

21. Verfahren nach Anspruch 20, **dadurch gekennzeichnet, dass** das Anbohren der Rohrleitung (4) und das Einschleusen des Arbeitsgeräts (2) unter einem Winkel zwischen 30° und 90° bezogen auf eine Längsachse der Rohrleitung (4) erfolgt.

22. Verfahren nach Anspruch 21, **dadurch gekennzeichnet, dass** das Anbohren der Rohrleitung (4) und das Einschleusen des Arbeitsgeräts (2) unter einem Winkel zwischen 30° und 60°, höchst vorzugsweise unter einem Winkel von etwa 45° erfolgt.

23. Verfahren nach einem der Ansprüche 20 bis 22, **dadurch gekennzeichnet, dass** vor dem Einbringen des Arbeitsgeräts (2) in die Rohrleitung (4) in diese eine Führungsanordnung (1.6, 1.9) für das Arbeitsgerät (2) zumindest teilweise eingebracht wird.

24. Verfahren nach Anspruch 23, **dadurch gekennzeichnet, dass** zumindest die Führungsanordnung (1.6, 1.9) gegen einen Betriebsdruck in der Rohrleitung (4) mittels einer Halteeinrichtung (1.10) in Position gehalten wird.

25. Verfahren nach Anspruch 23 oder 24, **dadurch gekennzeichnet, dass** das Arbeitsgerät (2) aus einem mit zumindest der Führungsanordnung (1.6, 1.9) verbundenen Transport/Lager-Behälter (1.4) in die Rohrleitung (4) injiziert wird.

## Claims

1. A device for introducing a pig-type tool into an operational pipeline (4), such as a gas pipeline, having a guide arrangement (1.6, 1.9) that can be introduced at least partially into a spot-drilled hole (4.4) of the pipeline (4) and comprises a substantially straight first pipe section (1.6) running at least in an insertion section (C) at an angle (α) to the pipeline longitudinal axis (L) and having a curved channel-shaped extension (1.6a) which, in the installed state, rests against a wall (4.2a) of the pipeline (4) lying opposite the spot-drilled hole (4.4), **characterised in that** the pipe section (1.6) has an internal bulge (1.6c) diametrically opposite the extension (1.6a).

2. A device according to claim 1, **characterised in that** in the contact region the curved extension (1.6a) of the guide arrangement (1.6, 1.9) has a tangent (T) substantially parallel to the pipeline longitudinal axis (L).

3. A device according to claim 1 or 2, **characterised in that** the guide arrangement (1.6, 1.9) has at the end thereof remote from the insertion section (C) a further curved pipe section (1.9) having a path bending away from the running direction (V) of the first pipe section (1.6).

4. A device according to claim 3, **characterised in that** the bend is substantially 90°.

5. A device according to claim 3 or 4, **characterised in that**, in the introduced state of the guide arrangement (1.6, 1.9), the second pipe section (1.9) is oriented at the end thereof remote from the first pipe section (1.6) at least locally in a plane substantially parallel to a running plane of the pipeline (4).

6. A device according to any one of claims 1 to 5, **characterised by** a sealing means (1.2) arranged in a joint region (B) between the first (1.6) and the second pipe section (1.9).

7. A device according to claim 6, **characterised in that** the sealing means (1.2) is in the form of a slide valve for pressure-tight closure of the guide arrangement (1.6, 1.9).

8. A device according to any one of claims 1 to 7, **characterised by** a transportation/storage container (1.4) for the tool (2), which container can be connected to the end of the guide arrangement (1.6, 1.9) remote from the insertion section (C).

9. A device according to claim 8, **characterised in that** the tool (2) can be injected from the transportation/storage container (1.4) through the guide arrangement (1.6, 1.9) into the pipeline (4).

10. A device according to claim 8 or 9, **characterised in that** the transportation/storage container (1.4) is arranged on a load-carrying means (1.5).

11. A device according to claim 10, **characterised in that** the load-carrying means (1.5) is movable, especially drivable.

12. A device according to claim 10 or 11, **characterised in that** the load-carrying means (1.5) is in the form of a low-loader.

13. A device according to any one of claims 1 to 12, **characterised by** a holding device (1.10) for holding the guide arrangement (1.6, 1.9) in position against an operating pressure (P) in the pipeline (4).

14. A device according to claim 13, **characterised in that** the holding device (1.10) is in the form of a ram arrangement (1.10, 1.10a) acting externally on the guide arrangement (1.6, 1.9).

15. A device according to claim 13 or 14, **characterised in that** the holding device (1.10) is designed to act on the guide arrangement (1.6, 1.9) in the region of the bend.

16. A device according to any one of claims 1 to 15, **characterised by** a coupler (1.1) mountable on the pipeline (4) and having a flange extension (1.1a) into which the guide arrangement (1.6, 1.9) can be introduced.

17. A device according to claim 16 having the characterising features of claims 5 and 12, **characterised in that** the sealing means (1.2) and the holding device (1.10) are jointly connectable to the flange extension (1.1a).

18. A device according to any one of claims 1 to 17, **characterised in that** the angle (α) is between 30° and 90°.

19. A device according to claim 18, **characterised in that** the angle (α) is approximately 45°.

20. A method for introducing a pig-type tool (2) into an operational pipeline, such as a fluid line, wherein the pipeline is spot-drilled during operation, a pipe section (1.6) is placed thereon and the tool (2) is locked in through the spot-drilled hole (4.4) along a curved, channel-shaped extension (1.6a) of the pipe section (1.6), **characterised in that** as it is locked into the pipeline (4) the tool is guided along an internal bulge (1.6c) lying diametrically opposite the extension (1.6a).

21. A method according to claim 20, **characterised in that** the spot-drilling of the pipeline (4) and the locking-in of the tool (2) is effected at an angle between 30° and 90° in relation to a longitudinal axis of the pipeline (4).

22. A method according to claim 21, **characterised in that** the spot-drilling of the pipeline (4) and the locking-in of the tool (2) is effected at an angle between 30° and 60°, most preferably at an angle of approximately 45°.

23. A method according to any one of claims 20 to 22, **characterised in that** prior to inserting the tool (2) into the pipeline (4) a guide arrangement (1.6, 1.9) for the tool (2) is inserted at least partially into the pipeline.

24. A method according to claim 23, **characterised in that** at least the guide arrangement (1.6, 1.9) is held in position by means of a holding device against an operational pressure in the pipeline (4).

25. A method according to claim 23 or 24, **characterised in that** the tool (2) is injected into the pipeline (4) from a transportation/storage container (1.4) connected at least to the guide arrangement (1.6, 1.9).

## Revendications

1. Dispositif d'introduction d'un outil en forme de triton dans une canalisation en service, telle qu'un gazoduc, avec un dispositif de guidage (1.6, 1.9) pouvant être introduit au moins partiellement dans un trou de perçage (4.4) de la canalisation (4) et comportant une première partie tubulaire (1.6) essentiellement droite qui s'étend, au moins sur une section d'introduction (C), en formant un angle (α) avec l'axe longitudinal de la canalisation (L), première partie tubulaire qui présente un prolongement courbé en forme de rainure (1.6a), qui est, en état introduit, en contact avec une paroi, opposée au trou de perçage (4.4), de la canalisation (4), **caractérisé en ce que** la partie tubulaire (1.6) présente un bombement interne (1.6c) diamétralement à l'opposé du prolongement (1.6a).

2. Dispositif suivant la revendication1, **caractérisé en ce que** le prolongement courbé (1.6a) du dispositif de guidage (1.6, 1.9) présente une tangente (T) essentiellement parallèle à l'axe longitudinal (L) de la canalisation dans la zone de contact.

3. Dispositif suivant une des revendications 1 ou 2, **caractérisé en ce que** le dispositif de guidage (1.6, 1.9) présente, au niveau de son extrémité détournée de la section d'introduction (C), une autre partie tubulaire courbée (1.9), dont le parcours dérive de la direction du parcours (V) de la première partie tubulaire (1.6).

4. Dispositif suivant la revendication 3, **caractérisé en ce que** la dérivation est essentiellement de 90°.

5. Dispositif suivant la revendication 3 ou 4, **caractérisé en ce qu'**en état introduit du dispositif de guidage (1.6, 1.9), la seconde partie tubulaire (1.9) est, au niveau de son extrémité détournée de la première partie tubulaire (1.6), alignée au moins localement sur un plan essentiellement parallèlement à un plan du parcours de la canalisation (4).

6. Dispositif suivant une des revendications 1 à 5, **caractérisé par** un moyen de fermeture (1.2) disposé dans la zone de jointure (B) entre la première partie tubulaire (1.6) et la seconde partie tubulaire (1.9).

7. Dispositif suivant la revendication 6, **caractérisé en ce que** le moyen de fermeture (1.2) est conçu comme tiroir servant fermer le dispositif de guidage (1.6, 1.9) de manière étanche à la pression.

8. Dispositif suivant une des revendications 1 à 7, **caractérisé par** un récipient de transport/stockage (1.4) de l'outil (2) qui peut être relié au dispositif de guidage (1.6, 1.9), à l'extrémité détournée de la section d'introduction (C) de celui-ci.

9. Dispositif suivant la revendication 8, **caractérisé en ce que** l'outil (2) peut être injecté dans la canalisation (4) depuis le récipient de transport/stockage (1.4) par le dispositif de guidage (1.6, 1.9).

10. Dispositif suivant la revendication 8 ou 9, **caractérisé en ce que** le récipient de transport/stockage (1.4) est disposé sur un dispositif porte-charge (1.5).

11. Dispositif suivant la revendication 10, **caractérisé en ce que** le dispositif porte-charge (1.5) est mobile, en particulier roulant.

12. Dispositif suivant la revendication 10 ou 11, **caractérisé en ce que** le dispositif porte-charge (1.5) est conçu comme chariot à plateforme surbaissée.

13. Dispositif suivant une des revendications 1 à 12, **caractérisé par** un dispositif de maintien (1.10) servant à maintenir le dispositif de guidage (1.6, 1.9) dans la canalisation (4) en position contre une pression de service (P).

14. Dispositif suivant la revendication 13, **caractérisé en ce que** le dispositif de maintien (1.10) est conçu comme dispositif tampon qui agit sur le dispositif de guidage (1.6, 1.9) depuis l'extérieur.

15. Dispositif suivant la revendication 13, **caractérisé en ce que** le dispositif de maintien (1.10) est conçu pour agir sur le dispositif de guidage (1.6, 1.9) dans la zone de la dérivation.

16. Dispositif suivant une des revendications 1 à 15, **caractérisé par** un manchon (1.1) pouvant être monté sur la canalisation (4) et comportant un prolongement à bride (1.1a), dans lequel le dispositif de guidage (1.6, 1.9) peut être introduit.

17. Dispositif suivant la revendication 16 avec les caractéristiques caractérisantes des revendications 5 et 12, **caractérisé en ce que** le moyen de fermeture (1.2) et le dispositif de maintien (1.10) peuvent être reliés ensemble au prolongement à bride (1.1a).

18. Dispositif suivant une des revendications 1 à 17, **caractérisé en ce que** l'angle (α) est compris entre 30° et 90°.

19. Dispositif suivant la revendication 18, **caractérisé en ce que** l'angle (α) est de 45° à peu près.

20. Procédé d'introduction d'un outil en forme de triton (2) dans une canalisation en service, telle qu'une canalisation de fluide, procédé suivant lequel la canalisation est percée, une partie tubulaire (1.6) posée sur elle et l'outil (2) introduit à travers le trou de perçage (4.4) le long d'un prolongement courbé en forme de rainure (1.6a) de la partie tubulaire (1.6) pendant le service, **caractérisé en ce que**, lors de l'introduction dans la canalisation (4), l'outil est guidé le long d'un bombement interne (1.6c) diamétralement opposé au prolongement (1.6a).

21. Procédé suivant la revendication 20, **caractérisé en ce que** le perçage de la canalisation (4) et l'introduction de l'outil (2) ont lieu en décrivant un angle compris entre 30° et 90° par rapport à un axe longitudinal de la canalisation (4).

22. Procédé suivant la revendication 21, **caractérisé en ce que** le perçage de la canalisation (4) et l'introduction de l'outil (2) ont lieu en décrivant un angle compris entre 30° et 60°, le plus préférentiellement un angle de 45° à peu près.

23. Procédé suivant une des revendications 20 à 22, **caractérisé en ce que** préalablement à l'introduction de l'outil (2) dans la canalisation (4), un dispositif de guidage (1.6, 1.9) de l'outil (2) est au moins partiellement introduit dans celle-ci.

24. Procédé suivant la revendication 23, **caractérisé en ce qu'**au moins le dispositif de guidage (1.6, 1.9) est maintenu dans la canalisation (4) en position contre une pression de service au moyen d'un dispositif de maintien (1.10).

25. Procédé suivant la revendication 23 ou 24, **caractérisé en ce que** l'outil (2) est injecté dans la canalisation (4) depuis un récipient de transport/stockage (1.4) relié au moins au dispositif de guidage (1.6, 1.9).
